# EUROPÄISCHE PATENTANMELDUNG

(11) **EP 2 177 268 A1**
(43) Veröffentlichungstag der Anmeldung: **21.04.2010**
(21) Anmeldenummer: 09012546.9
(22) Anmeldetag: 05.10.2009
(51) Int. Cl.: B01J 27/12, B01J 27/138, C01B 7/04, B01J 23/46

(54) **Ru/MgF2 Katalysator und Verfahren zur Herstellung von Chlor durch Gasphasenoxidation**

(30) Priorität: 17.10.2008 DE 102008052012
(71) Anmelder: Bayer MaterialScience AG, 51368 Leverkusen (DE)
(72) Erfinder: Wolf, Aurel. Dr., 42489 Wülfrath (DE); Mleczko, Leslaw, Prof. Dr., 41542 Dormagen (DE); Schlüter, Oliver Felix-Karl, Dr., 51371 Leverkusen (DE); Schubert, Stephan, Dr., Baytown, TX 77520-8727 (US)

(57) **Zusammenfassung**

Die vorliegende Erfindung betrifft ein Verfahren zur Herstellung von Chlor durch katalytische Gasphasenoxidation von Chlorwasserstoff mit Sauerstoff, worin der Katalysator Magnesiumfluorid und mindestens eine Halogen enthaltende Ruthenium-Verbindung umfasst, eine Katalysatorzusammensetzung und deren Verwendung.

## Beschreibung

Die vorliegende Erfindung betrifft ein Verfahren zur Herstellung von Chlor durch katalytische Gasphasenoxidation von Chlorwasserstoff mit Sauerstoff, worin der Katalysator ein Magnesiumfluorid und mindestens eine Halogen und/oder Sauerstoff enthaltende Ruthenium-Verbindung umfasst, eine Katalysatorzusammensetzung und deren Verwendung.

Das von Deacon 1868 entwickelte Verfahren der katalytischen Chlorwasserstoffoxidation mit Sauerstoff in einer exothermen Gleichgewichtsreaktion stand am Anfang der technischen Chlorchemie:

4 HCl + O₂ ⇒ 2 Cl₂ + 2 H₂O.

Durch die Chloralkalielektrolyse wurde das Deacon-Verfahren jedoch stark in den Hintergrund gedrängt. Nahezu die gesamte Produktion von Chlor erfolgte durch Elektrolyse wässriger Kochsalzlösungen [Ullmann Encyclopedia of industrial chemistry, seventh release, 2006]. Die Attraktivität des Deacon-Verfahrens nimmt jedoch in jüngster Zeit wieder zu, da der weltweite Chlorbedarf stärker wächst als die Nachfrage nach Natronlauge. Dieser Entwicklung kommt das Verfahren zur Herstellung von Chlor durch Oxidation von Chlorwasserstoff entgegen, das von der Natronlaugenherstellung entkoppelt ist. Darüber hinaus fällt Chlorwasserstoff in großen Mengen beispielsweise bei Phosgenierungsreaktionen, etwa bei der Isocyanat-Herstellung, als Koppelprodukt an.

Die Oxidation von Chlorwasserstoff zu Chlor ist eine Gleichgewichtsreaktion. Die Lage des Gleichgewichts verschiebt sich mit zunehmender Temperatur zu Ungunsten des gewünschten Endproduktes. Es ist daher vorteilhaft, Katalysatoren mit möglichst hoher Aktivität einzusetzen, die die Reaktion bei niedriger Temperatur ablaufen lassen.

Als aktueller Stand der Technik werden für die HCl-Oxidation Ruthenium basierte Katalysatoren eingesetzt. Erste Katalysatoren für die Chlorwasserstoffoxidation mit der katalytisch aktiven Komponente Ruthenium wurden schon 1965 in DE 1 567 788 beschrieben, in diesem Fall ausgehend von RuCl₃ z.B. geträgert auf Siliziumdioxid und Aluminiumoxid. Weitere Ru-basierte Katalysatoren mit der Aktivmasse Rutheniumoxid oder Rutheniummischoxid und als Trägermaterial verschiedene Oxide, wie bspw. Titandioxid, Zirkondioxid, usw. wurden in DE-A 197 48 299, DE-A 197 34 412 und EP 0 936 184 A2 beschrieben. Weiterhin offenbaren die Schriften WO 2007/134772 A1 und WO 2007/134721 A1 Ruthenium-basierte Katalysatorsysteme enthaltend Zinndioxid. Die oxidischen Träger haben den Nachteil, dass sie mit dem bei der Reaktion vorhandenen Chlorwasserstoff unter Bildung von flüchtigen Metallhalogeniden reagieren können. Somit kann sowohl die Aktivität als auch ist die mechanische Stabilität des Katalysators negativ beeinflusst werden.

Ein weiteres hochaktives Ru-basiertes Katalysatorsystem wird in WO 2007/134722 A1 beschrieben. In dieser Anmeldung wird die katalytisch aktive Komponente Ru auf einen Kohlenstoffträger speziell Carbon Nanotubes aufgebracht. Der Nachteil dieses Systems liegt in der möglichen Reaktion des Trägers mit dem für die Chlorwasserstoffoxidation benötigten Sauerstoff bei höherer Reaktionstemperatur.

Die bisherigen entwickelten Ru-Katalysatoren mit oxidischen oder kohlenstoffbasierten Trägem besitzen eine unter den typischen Reaktionsbedingungen unzulängliche Stabilität. Demzufolge besteht ein Bedarf nach Ru-basierten katalytischen Systemen die nicht auf oxidischen oder auf kohlenstoffbasierten Trägem beruhen und gleichzeitig eine hohe Aktivität und Stabilität aufweisen

Die Aufgabe der vorliegenden Erfmdung besteht darin, ein katalytisches System bereit zustellen, welches nicht auf oxidischen bzw. Kohlenstoff enthaltenden Trägermaterialien basiert und die Oxidation von Chlorwasserstoff bei niedriger Temperatur und mit hoher Aktivität bewerkstelligt. Gelöst wird die Aufgabe durch die Entwicklung einer ganz spezifischen Kombination aus katalytisch aktiven Komponenten und einem spezifischen Trägermaterial.

Überraschenderweise wurde gefunden, dass durch die gezielte Trägerung einer Ruthenium enthaltenden Verbindung auf Magnesiumfluorid, aufgrund einer besonderen, nicht vorhersehbaren Wechselwirkung zwischen katalytisch aktiver Komponente und Träger, neue hochaktive Katalysatoren bereitgestellt werden, die insbesondere bei Temperaturen von ≤ 400 °C bei der Chlorwasserstoff-Oxidation noch eine hohe katalytische Aktivität aufweisen.

Gegenstand der Erfindung ist eine Katalysatorzusammensetzung, die mindestens Magnesiumfluorid als Trägermaterial und mindestens eine Ruthenium enthaltende Verbindung als katalytisch aktives Material umfasst.

Weiterer Gegenstand der Erfmdung ist auch ein Verfahren zur Herstellung von Chlor durch katalytische Gasphasenoxidation von Chlorwasserstoff mit Sauerstoff, worin der Katalysator wenigstens Magnesiumfluorid und eine Ruthenium-Verbindung umfasst.

In einer bevorzugten Ausführung wird Magnesiumfluorid als Träger der katalytisch aktiven Komponente eingesetzt, besonders bevorzugt Magnesiumfluorid in Rutilstruktur.

Erfindungsgemäß wird als katalytisch aktive Komponente mindestens eine Ruthenium enthaltende Verbindung verwendet. Dabei handelt es sich insbesondere um ein Rutheniumhalogenid, Rutheniumhydroxid, Rutheniumoxid, Rutheniumoxihalogenid und/oder Ruthenium in metallischer Form.

Bevorzugt ist eine Katalysatorzusammensetzung, in der die Rutheniumverbindung eine Halogen und/oder Sauerstoff enthaltende Rutheniumverbindung ist.

Bevorzugt wird als katalytisch aktive Komponente eine Halogen-enthaltenden Ruthenium-Verbindung verwendet. Dabei handelt es sich z.B. um eine Verbindung, bei der Halogen ionisch bis polarisiert kovalent an ein Rutheniumatom gebunden ist.

Das Halogen in der bevorzugten Halogen-enthaltenden Ruthenium-Verbindung wird bevorzugt aus der Gruppe ausgewählt, die aus Chlor, Brom und Iod besteht. Besonders bevorzugt ist Chlor.

Die Halogen enthaltende Ruthenium-Verbindung schließt solche ein, die ausschließlich aus Halogen und Ruthenium bestehen. Bevorzugt sind jedoch solche, die sowohl Sauerstoff als auch Halogen, insbesondere Chlor bzw. Chlorid enthalten. Besonders bevorzugt ist eine Katalysatorzusammensetzung, in der die katalytisch aktive Rutheniumverbindung ausgewählt ist aus der Reihe: Rutheniumchlorid, Rutheniumoxychlorid und einer Mischung von Rutheniumchlorid und Rutheniumoxid und insbesondere eine Rutheniumoxychlorid-Verbindung umfasst.

Besonders bevorzugt wird als katalytisch aktive Spezies mindestens eine Rutheniumoxychlorid-Verbindung verwendet. Eine Rutheniumoxychlorid-Verbindung im Sinne der Erfmdung ist eine Verbindung bei der sowohl Sauerstoff als auch Chlor ionisch bis polarisiert kovalent an Ruthenium gebunden vorliegen. Eine solche Verbindung weist also die allgemeine Zusammensetzung RuOₓCl_{y} auf. Bevorzugt können verschiedene derartige Rutheniumoxychlorid-Verbindungen nebeneinander im Katalysator vorliegen. Beispiele definierter besonders bevorzugter Rutheniumoxychlorid-Verbindungen schließen insbesondere folgende Zusammensetzungen ein: Ru₂Cl₄, RuOCl₂, Ru₂OCl₅ und Ru₂OCl₆.

In einem besonders bevorzugten Verfahren ist die Halogen enthaltende Ruthenium-Verbindung eine Mischverbindung entsprechend der allgemeinen Formel RuClₓO_{y}, worin x eine Zahl von 0,8 bis 1,5 und y eine Zahl von 0,7 bis 1,6 bedeutet.

Die katalytisch aktive Rutheniumoxychlorid-Verbindung im Sinne der Erfindung ist bevorzugt durch ein Verfahren erhältlich, welches zunächst das Aufbringen einer insbesondere wässrigen Lösung oder Suspension von mindestens einer Halogen enthaltenden Rutheniumverbindung auf Magnesiumfluorid und das Entfernen des Lösungsmittels umfasst.

Andere denkbare Verfahren schließen die Chlorierung von nichtchlorhaltigen Ruthenium-Verbindungen, wie Rutheniumhydroxiden vor oder nach dem Aufziehen der Ruthenium-Verbindung auf den Träger ein.

Ein bevorzugtes Verfahren schließt das Aufbringen einer wässrigen Lösung von RuCl₃ auf das Magnesiumfluorid ein.

Nach dem Aufbringen der Ruthenium-Verbindung erfolgt im Allgemeinen ein Trocknungsschritt, der zweckmäßig in Anwesenheit von Sauerstoff bzw. Luft erfolgt, um zumindest teilweise eine Umwandlung in die bevorzugten Rutheniumoxychlorid-Verbindungen zu ermöglichen. Um eine Umwandlung der bevorzugten Rutheniumoxychlorid-Verbindungen in Rutheniumoxide zu vermeiden, sollte die Trocknung bevorzugt bei weniger als 280°C durchgeführt werden, insbesondere bei wenigstens 80°C, besonders bevorzugt wenigstens 100°C.

Ein bevorzugtes Verfahren ist **dadurch gekennzeichnet, dass** der Katalysator dadurch erhältlich ist, dass ein mit einer Halogen enthaltenden Rutheniumverbindung beladener Magnesiumfluoridträger bei einer Temperatur von mindestens 200°C, bevorzugt mindestens 240°C, besonders bevorzugt mindestens 250°C bis 500°C, insbesondere in einer Sauerstoff enthaltenden Atmosphäre, besonders bevorzugt unter Luft kalziniert wird.

In einem besonders bevorzugten Verfahren beträgt der Anteil des Rutheniums aus der katalytisch aktiven Rutheniumverbindung im Verhältnis zur gesamten Katalysatorzusammensetzung, insbesondere nach dem Kalzinieren, 0,5 bis 5 Gew-%, bevorzugt 1,0 bis 4 Gew-%, besonders bevorzugt 1,5 bis 3 Gew.-%.

Will man als katalytisch aktive Spezies Halogen-Ruthenium-Verbindungen, die keinen Sauerstoff enthalten, aufziehen, so kann man unter Sauerstoffausschluss auch bei höheren Temperaturen trocknen.

Bevorzugt ist der Katalysator erhältlich durch ein Verfahren, welches das Aufbringen einer wässrigen Lösung oder Suspension von mindestens einer Halogen enthaltenden Rutheniumverbindung auf Magnesiumfluorid und das anschließende Trocknen bei weniger als 280°C umfasst, und anschließender Aktivierung unter den Bedingungen der Gasphasenoxidation von Chlorwasserstoff, bei der eine weitgehende Umwandlung in die Rutheniumoxychloride stattfindet. Je länger die Trocknung in Gegenwart von Sauerstoff erfolgt, desto mehr Oxychlorid bildet sich.

In einer besonders bevorzugten Variante wird auf den Träger eine Sauerstoff enthaltende Ruthenium-Verbindung aufgebracht. Dabei handelt es sich um eine Verbindung bei der Sauerstoff ionisch bis polarisiert kovalent an ein Rutheniumatom gebunden ist. Diese Verbindung wird durch das Aufbringen einer wässrigen Lösung oder Suspension von mindestens einer Halogenid enthaltenden Rutheniumverbindung auf Magnesiumfluorid und die anschließende Fällung mittels einer alkalischen Verbindung zu Rutheniumhydroxid und gegebenenfalls die Kalzinierung des gefällten Produktes hergestellt.

Die Fällung kann alkalisch unter direkter Bildung der Sauerstoff enthaltenden Ruthenium-Verbindung durchgeführt werden. Sie kann auch reduzierend unter primärer Bildung von metallischem Ruthenium erfolgen, das anschließend unter Sauerstoffzufuhr kalziniert wird, wobei sich die Sauerstoff enthaltende Ruthenium-Verbindung bildet.

Ein bevorzugtes Verfahren schließt das Aufbringen durch Imprägnierung, Tränkung usw. einer wässrigen Lösung von RuCl3 auf das Magnesiumfluorid ein.

Nach dem Aufbringen der Halogenid-enthaltenden Ruthenium-Verbindung erfolgt im allgemeinen ein Fällungs- und ein Trocknungs- oder Kalzinierungsschritt, der zweckmäßig in Anwesenheit von Sauerstoff bzw. Luft bei Temperaturen von bis zu 650°C erfolgt.

Üblicherweise liegt die Beladung der katalytisch aktiven Komponente, d.h. der Sauerstoff enthaltenen Rutheniumverbindung, im Bereich von 0,1-80 Gew.-%, bevorzugt im Bereich von 1-50 Gew.-%, besonders bevorzugt im Bereich von 1-20 Gew.-%, bezogen auf das Gesamtgewicht des Katalysators (Katalysator-Komponente und Träger).

Besonders bevorzugt kann die katalytische Komponente, d.h. die Ruthenium enthaltende Verbindung beispielsweise durch Feucht- und Nass-Imprägnierung eines Trägers mit geeigneten in Lösung vorhandenen Ausgangsverbindungen oder Ausgangsverbindungen in flüssiger oder kolloidaler Form, Auf- und Co-Auffällverfahren, sowie Ionenaustausch und Gasphasenbeschichtung (CVD, PVD) auf den Träger aufgebracht werden.

Die Vorbehandlung des Magnesiumfluorid-Trägers kann insbesondere durch eine Kalzinierung in Gegenwart von Sauerstoff enthaltenden Gasen, insbesondere Luft, beispielsweise bei 250-1500°C, ganz bevorzugt jedoch bei 300-1200°C, erfolgen.

Die Katalysatoren können unter Normaldruck oder vorzugsweise bei vermindertem Druck bevorzugt bei 40 bis 200°C getrocknet werden. Die Trocknungsdauer beträgt bevorzugt 10 min bis 6 h.

Die Katalysatoren können unter Sauerstoff oder Schutzgas bei 250 bis 500 °C kalziniert werden. Die Kalzinierdauer beträgt bevorzugt 30 min bis 24 h.

Die erfindungsgemäßen Katalysatoren für die Chlorwasserstoffoxidation zeichnen sich durch eine hohe Aktivität bei niedrigen Temperaturen aus.

Bevorzugt wird, wie oben bereits beschrieben, die neue Katalysatorzusammensetzung in dem als Deacon-Prozess bekannten katalytischen Verfahren eingesetzt. Hierbei wird Chlorwasserstoff mit Sauerstoff in einer exothermen Gleichgewichtsreaktion zu Chlor oxidiert, wobei Wasserdampf anfällt. Die Reaktionstemperatur beträgt üblicherweise 180 bis 500°C, besonders bevorzugt 200 bis 400°C, insbesondere bevorzugt 220 bis 350°C, der übliche Reaktionsdruck beträgt 1 bis 25 bar, bevorzugt 1,2 bis 20 bar, besonders bevorzugt 1,5 bis 17 bar, ganz besonders bevorzugt 2 bis 15 bar. Da es sich um eine Gleichgewichtsreaktion handelt, ist es zweckmäßig, bei möglichst niedrigen Temperaturen zu arbeiten, bei denen der Katalysator noch eine ausreichende Aktivität aufweist. Ferner ist es zweckmäßig, Sauerstoff in überstöchiometrischen Mengen zum Chlorwasserstoff einzusetzen. Üblich ist beispielsweise ein zwei- bis vierfacher Sauerstoff-Überschuss. Da keine Selektivitätsverluste zu befürchten sind, kann es wirtschaftlich vorteilhaft sein, bei relativ hohem Druck und dementsprechend bei gegenüber Normaldruck längerer Verweilzeit zu arbeiten.

Geeignete Katalysatoren können ergänzend zu der Rutheniumverbindung auch Verbindungen anderer Metalle oder Edelmetalle, beispielsweise Gold, Palladium, Platin, Osmium, Iridium, Silber, Kupfer, Chrom oder Rhenium enthalten.

Die katalytische Chlorwasserstoff- Oxidation kann bevorzugt adiabatisch oder isotherm oder annähernd isotherm, diskontinuierlich, bevorzugt aber kontinuierlich als Fließ- oder Festbettverfahren, bevorzugt als Festbettverfahren, besonders bevorzugt in Rohrbündelreaktoren an Heterogenkatalysatoren bei einer Reaktortemperatur von 180 bis 500°C, bevorzugt 200 bis 400°C, besonders bevorzugt 220 bis 350°C und einem Druck von 1 bis 25 bar (1000 bis 25000 hPa), bevorzugt 1,2 bis 20 bar, besonders bevorzugt 1,5 bis 17 bar und insbesondere bevorzugt 2,0 bis 15 bar durchgeführt werden.

Übliche Reaktionsapparate, in denen die katalytische Chlorwasserstoff-Oxidation durchgeführt wird, sind Festbett- oder Wirbelbettreaktoren. Die katalytische Chlorwasserstoff- Oxidation kann bevorzugt auch mehrstufig durchgeführt werden.

Bei der adiabatischen, der isothermen oder annähernd isothermen Verfahrensführung, bevorzugt aber bei der adiabatischen Verfahrensführung, können auch mehrere, insbesondere 2 bis 10, bevorzugt 2 bis 6, in Reihe geschaltete Reaktoren mit Zwischenkühlung eingesetzt werden. Der Chlorwasserstoff kann entweder vollständig zusammen mit dem Sauerstoff vor dem ersten Reaktor oder über die verschiedenen Reaktoren verteilt zugegeben werden. Diese Reihenschaltung einzelner Reaktoren kann auch in einem Apparat zusammengeführt werden.

Eine weitere bevorzugte Ausflihrungsform einer für das Verfahren geeigneten Vorrichtung besteht darin, dass man eine strukturierte Katalysatorschüttung einsetzt, bei der die Katalysatoraktivität in Strömungsrichtung ansteigt. Eine solche Strukturierung der Katalysatorschüttung kann durch unterschiedliche Tränkung der Katalysatorträger mit Aktivmasse oder durch unterschiedliche Verdünnung des Katalysators mit einem Inertmaterial erfolgen. Als Inertmaterial können beispielsweise Ringe, Zylinder oder Kugeln aus Magnesiumfluorid, Titandioxid, Zirkondioxid oder deren Gemischen, Aluminiumoxid, Steatit, Keramik, Glas, Graphit oder Edelstahl, bevorzugt Magnesiumfluorid, eingesetzt werden. Beim bevorzugten Einsatz von Katalysatorformkörpern sollte das Inertmaterial bevorzugt ähnliche äußere Abmessungen haben.

Als Katalysatorformkörper eignen sich Formkörper mit beliebigen Formen, bevorzugt sind Tabletten, Ringe, Zylinder, Sterne, Wagenräder oder Kugeln, besonders bevorzugt sind Ringe, Zylinder, Kugeln oder Sternstränge als Form. Bevorzugt ist die Kugelform. Die Größe der Katalysatorformkörper, bspw. Durchmesser bei Kugeln oder maximale Querschnittsbreite beträgt im Mittel insbesondere 0,3 bis 7 mm, ganz bevorzugt 0,8 bis 5 mm.

Alternativ zu den zuvor beschriebenen feinteiligen Katalysator(form)körpern kann der Träger auch ein Monolith aus Trägermaterial sein, z.B. nicht nur ein "klassischer" Trägerkörper mit parallelen, radial nicht untereinander verbundenen Kanälen; es zählen auch Schäume, Schwämme o.dgl. mit dreidimensionalen Verbindungen innerhalb des Trägerkörpers zu den Monolithen sowie Trägerkörper mit Kreuzstromkanälen.

Der monolithische Träger kann eine Wabenstruktur, aber auch eine offene oder geschlossene Kreuzkanalstruktur aufweisen. Der monolithische Träger besitzt eine bevorzugte Zelldichte von 100 bis 900 cpsi (cells per square inch), besonders bevorzugt von 200 bis 600 cpsi.

Ein Monolith im Sinne der vorliegenden Erfindung wird z.B. in "Monoliths in multiphase catalytic processes - aspects and prospects" von F. Kapteijn, J. J. Heiszwolf, T. A. Nijhuis und J. A. Moulijn, Cattech 3, 1999, S. 24 offenbart.

Als zusätzliche Trägermaterialen oder Bindemittel für den Träger eignen sich besonders beispielsweise Siliziumdioxid, Graphit, Titandioxid mit Rutil- oder Anatas-Struktur, Zirkondioxid, Aluminiumoxid oder deren Gemische, bevorzugt Titandioxid, Zirkondioxid, Aluminiumoxid oder deren Gemische, besonders bevorzugt γ- oder δ-Aluminiumoxid oder deren Gemische. Bevorzugtes Bindemittel ist Aluminiumoxid oder Zirkonoxid. Der Anteil an Bindemittel kann bezogen auf den fertigen Katalysator 1 bis 30 Gew.-% betragen, bevorzugt 2 bis 25 Gew.-% und ganz bevorzugt 5 bis 20 Gew.-%. Das Bindemittel erhöht die mechanische Stabilität (Festigkeit) der Katalysatorformkörper.

In einer besonders bevorzugten Variante der Erfindung ist die katalytisch aktive Komponente im Wesentlichen auf der Oberfläche des eigentlichen Trägermaterials, z.B. des Magnesiumfluorids, nicht jedoch auf der Oberfläche des Bindemittels vorliegend.

Zur zusätzlichen Dotierung der Katalysatoren eignen sich als Promotoren Alkalimetalle oder Metallverbindungen wie Lithium, Natrium, Kalium, Rubidium und Cäsium, bevorzugt Lithium, Natrium und Kalium, besonders bevorzugt Kalium, Erdalkalimetalle wie Magnesium, Calcium, Strontium und Barium, bevorzugt Magnesium und Calcium, besonders bevorzugt Magnesium, Seltenerdmetalle wie Scandium, Yttrium, Lanthan, Cer, Praseodym und Neodym, bevorzugt Scandium, Yttrium, Lanthan und Cer, besonders bevorzugt Lanthan und Cer, oder deren Gemische.

Die Promotoren können, ohne darauf beschränkt zu sein, durch Imprägnier- und CVD-Verfahren auf den Katalysator aufgebracht werden, bevorzugt ist eine Imprägnierung z. B. von Metallverbindungen, insbesondere Nitraten, insbesondere bevorzugt ist ein gemeinsames Aufbringen mit der katalytischen Hauptkomponente.

Der Umsatz an Chlorwasserstoff bei der HCl-Oxidation im einfachen Durchgang kann bevorzugt auf 15 bis 90%, bevorzugt 40 bis 85%, besonders bevorzugt 50 bis 70% begrenzt werden. Nicht umgesetzter Chlorwasserstoff kann nach Abtrennung teilweise oder vollständig in die katalytische Chlorwasserstoff-Oxidation zurückgeführt werden. Das Volumenverhältnis von Sauerstoff zu Chlorwasserstoff am Reaktoreintritt beträgt bevorzugt 1:1 bis 20:1, bevorzugt 2:1 bis 8:1, besonders bevorzugt 2:1 bis 5:1.

Die Reaktionswärme der katalytischen Chlorwasserstoff-Oxidation kann in vorteilhafter Weise zur Erzeugung von Hochdruck-Wasserdampf genutzt werden. Dieser kann zum Betrieb eines Phosgenierungsreaktors und/oder von Destillationskolonnen, insbesondere von Isocyanat-Destillationskolonnen genutzt werden.

In einem weiteren Schritt wird das gebildete Chlor abgetrennt. Der Abtrennschritt umfasst üblicherweise mehrere Stufen, nämlich die Abtrennung und gegebenenfalls Rückführung von nicht umgesetztem Chlorwasserstoff aus dem Produktgasstrom der katalytischen Chlorwasserstoff-Oxidation, die Trocknung des erhaltenen, im wesentlichen Chlor und Sauerstoff enthaltenden Stroms sowie die Abtrennung von Chlor aus dem getrockneten Strom.

Die Abtrennung von nicht umgesetztem Chlorwasserstoff und von gebildetem Wasserdampf kann durch Auskondensieren von wässriger Salzsäure aus dem Produktgasstrom der Chlorwasserstoffoxidation durch Abkühlung erfolgen. Chlorwasserstoff kann auch in verdünnter Salzsäure oder Wasser absorbiert werden.

Gegenstand der Erfmdung ist ferner die Verwendung von Magnesiumfluorid als Katalysatorträger für einen Katalysator in der katalytischen Gasphasenoxidation von Chlorwasserstoff mit Sauerstoff.

Ein weiterer Gegenstand der Erfindung ist die Verwendung der neuen Katalysatorzusammensetzung als Katalysator, insbesondere für Oxidationsreaktionen, besonders bevorzugt als Katalysator in der katalytischen Gasphasenoxidation von Chlorwasserstoff mit Sauerstoff.

Die folgenden Beispiele veranschaulichen die vorliegende Erfmdung:

### Beispiele

### Beispiel 1 (Erfindung)

### Trägerung von Rutheniumchlorid auf Magnesiumfluorid

In einem Rundkolben wurden 9,8 g handelübliches MgF₂ (Firma Aldrich) in einer Lösung aus im Handel erhältlichen 0,5 g Rutheniumchlorid-n-Hydrat in 28 ml Wasser suspendiert und 180 min bei Raumtemperatur gerührt. Die überschüssige Lösung wurde bei 60°C über Nacht eingedampft. Der erhaltene Feststoff wurde anschließend 16 h bei 250°C im Luftstrom kalziniert, wobei ein Rutheniumchloridkatalysator geträgert auf Magnesiumfluorid erhalten wurde. Die geträgerte Menge an Ruthenium entspricht einem Anteil von 2 Gew.-%.

### Beispiel 2 (Erfindung)

### Trägerung von Rutheniumchlorid auf Magnesiumfluorid

30 g kugelförmige Magnesiumfluorid Formkörper (Hersteller Saint-Gobain) mit einem durchschnittlichen Durchmesser von 1,5 mm und einer BET-Oberfläche von 13,1 m²/g wurden mit einer Lösung aus 1,55 g handelsüblichem Rutheniumchlorid-n-Hydrat in 12,29 g H₂O imprägniert. Nach einer Standzeit von 1 h wurde der Feststoff im Luftstrom bei ca. 60 °C innerhalb von 5 h getrocknet. Anschließend wurde der Katalysator 16 h bei 250 °C kalziniert. Es ergibt sich ein Katalysator mit umgerechnet 2 Gew.-%, an Ruthenium.

### Beispiel 3 (Vergleichsbeispiel)

### Herstellen eines Ruthenium-Katalysators zur Verwendung in der ersten Reaktionszone

50 g kugelförmige SnO₂-Formkörper mit einem durchschnittlichen Durchmesser von 1,9 mm, einer BET-Oberfläche von 0,5 m²/g und 15 Gew.-% Al₂O₃ als Binder wurden mit einer Lösung aus 2,498 g eines handelsüblichem Rutheniumchlorid-n-Hydrat (Heraeus GmbH) in 5,03 g H₂O imprägniert. Nach einer Standzeit von 1 h wurde der Feststoff im Luftstrom 4 Stunden bei 60°C getrocknet. Anschließend wurde der Katalysator 16 h bei 250°C kalziniert. Es ergibt sich ein Katalysator mit umgerechnet 2 Gew.-%, an Ruthenium.

### Katalysator-Test Beispiel 1

### Einsatz des Katalysators aus Beispiel 1 in der Hut-oxidation

0,2 g des Katalysators gemäß Beispiel 1 wurden in einer Festbettschüttung in einem Quarzreaktionsrohr (Innendurchmesser 10 mm) bei 300°C mit einem Gasgemisch aus 80 ml/min (Standardbedingungen STP) Chlorwasserstoff und 80 ml/min (STP) Sauerstoff durchströmt. Das Quarzreaktionsrohr wurde durch eine elektrisch beheizte Sandwirbelschicht beheizt. Nach 30 min wurde der Produktgasstrom für 15 min in 16%-ige Kaliumiodidlösung geleitet. Das entstandene Iod wurde anschließend mit 0,1 N Thiosulfat-Maßlösung zurücktitriert, um die eingeleitete Chlormenge festzustellen. Es wurde ein Chlorbildungsrate von 1,48 kg_{Cl2}/kg_{KAT}·h gemessen.

### Katalysator-Test Beispiel 2

### Einsatz des Katalysators aus Beispiel 2 in der HCl-Oxidation

25 g des Katalysators gemäß Beispiel 2 wurden in einem mit Ölbad beheiztem Ni-Festbettreaktor (Durchmesser 22 mm, Länge 800 mm) zusammen mit 75 g Inertmaterial (Glaskugeln) eingebaut. Dabei wurde eine Festbettschüttung von ca. 150 mm erhalten. Die Festbettschüttung wurde mittels eines auf 350 °C aufgeheizten Wärmeträgers beheizt. Bei einem Druck von 4 bar wurde der Festbettreaktor mit einem Gasgemisch aus 40,5 L/h (STP) Chlorwasserstoff, 315 L/h (STP) Sauerstoff und 94,5 L/h (STP) Stickstoff durchströmt. Nach einer definierten Reaktionszeit (bspw. 30 min) wurde der Produktgasstrom für 5 min in 16%-ige Kaliumiodidlösung geleitet. Das entstandene Iod wurde anschließend mit 0,1 N Thiosulfat-Maßlösung zurücktitriert, um die eingeleitete Chlormenge festzustellen. Die daraus berechnete Katalysatoraktivität betrug 1,8 kg_{Cl2}/kg_{KAT·}h. Die Analyse auf Magnesium im Kondensat wurde mittels ICP-OES (Inductively Coupled Plasma - Optical Emission Spectrometry, Gerät: Varian Vista-PRO, Methode nach Herstellerangaben) durchgeführt und ergab Werte unterhalb der Nachweisgrenze (<0,50 mg/L).

### Katalysator-Test Beispiel 3 (Vergleich)

### Einsatz des Katalysators aus Beispiel 3 in der HCl-Oxidation

25 g des Katalysators gemäß Beispiel 3 wurden analog des Katalysatortestbeispiels 2 getestet. Es wurde eine Chlorbildungsrate von 1,6 kg_{Cl2}/kg_{KAT}·h gemessen. Die Analyse auf Zinn im Kondensat wurde mittels ICP-OES (Inductively Coupled Plasma - Optical Emission Spectrometry, Gerät: Varian Vista-PRO, Methode nach Herstellerangaben) durchgeführt und ergab Werte von 2,1 mg/L.

## Patentansprüche

1. Katalysatorzusammensetzung, die mindestens Magnesiumfluorid als Trägermaterial und mindestens eine Ruthenium enthaltende Verbindung als katalytisch aktives Material umfasst.

2. Zusammensetzung nach Anspruch 1, **dadurch gekennzeichnet, dass** die Rutheniumverbindung eine Halogen und/oder Sauerstoff enthaltende Ruthenium-verbindung ist.

3. Zusammensetzung nach Anspruch 2, **dadurch gekennzeichnet, dass** das Halogen der Rutheniumverbindung aus der Reihe: Chlor, Brom und Iod ausgewählt ist und insbesondere Chlor ist.

4. Zusammensetzung nach einem der Ansprüche 1 bis 3, **dadurch gekennzeichnet, dass** die katalytisch aktive Rutheniumverbindung ausgewählt ist aus der Reihe: Rutheniumchlorid, Rutheniumoxychlorid und einer Mischung von Rutheniumchlorid und Rutheniumoxid und insbesondere eine Rutheniumoxychlorid-Verbindung umfasst.

5. Zusammensetzung nach Anspruch 4, **dadurch gekennzeichnet, dass** die katalytisch aktive Rutheniumverbindung eine Mischverbindung entsprechend der allgemeinen Formel RuClₓO_{y} ist, worin x eine Zahl von 0,8 bis 1,5 und y eine Zahl von 0,7 bis 1,6 bedeutet.

6. Zusammensetzung nach einem der Ansprüche 1 bis 5, **dadurch gekennzeichnet, dass** die Katalysatorzusammensetzung durch ein Verfahren erhältlich ist, welches das Aufbringen einer Lösung oder Suspension, insbesondere einer wässrigen Lösung oder Suspension von mindestens einer Halogen enthaltenden Rutheniumverbindung auf Magnesiumfluorid und das Entfernen des Lösungsmittels umfasst.

7. Zusammensetzung nach Anspruch 6, **dadurch gekennzeichnet, dass** die Halogen enthaltend Rutheniumverbindung RuCl₃ ist.

8. Zusammensetzung nach Anspruch 6 oder 7, **dadurch gekennzeichnet, dass** der Katalysator durch ein Verfahren erhältlich ist, bei dem das Entfernen des Lösungsmittels eine Trocknung bei wenigstens 80°C, bevorzugt wenigstens 100°C umfasst.

9. Zusammensetzung nach einem der Ansprüche 1 bis 8, **dadurch gekennzeichnet, dass** die Katalysatorzusammensetzung **dadurch** erhältlich ist, dass ein mit einer Halogen enthaltenden Rutheniumverbindung beladener Magnesiumfluoridträger bei einer Temperatur von mindestens 200°C, bevorzugt mindestens 240°C, besonders bevorzugt 250°C bis 500°C, insbesondere in einer Sauerstoff enthaltenden Atmosphäre, besonders bevorzugt unter Luft kalziniert wird.

10. Zusammensetzung nach einem der Ansprüche 1 bis 9, **dadurch gekennzeichnet, dass** der Anteil des Rutheniums aus der Halogen enthaltenden Rutheniumverbindung im Verhältnis zur gesamten Katalysatorzusammensetzung, insbesondere nach dem Kalzinieren, 0,5 bis 5 Gew.-%, bevorzugt 1,0 bis 4 Gew.-%, besonders bevorzugt 1,5 bis 3 Gew.-% beträgt.

11. Zusammensetzung nach einem der Ansprüche 1 bis 10 **dadurch gekennzeichnet, dass** das Magnesiumfluorid wenigstens teilweise, bevorzugt vollständig in der Rutilform vorliegt.

12. Verfahren zur Herstellung von Chlor durch katalytische Gasphasenoxidation von Chlorwasserstoff mit Sauerstoff an Feststoffkatalysator, **dadurch gekennzeichnet, dass** der Katalysator wenigstens Magnesiumfluorid als Trägermaterial und mindestens eine Ruthenium enthaltende Verbindung als katalytisch aktives Material umfasst.

13. Verfahren nach Anspruch 12, **dadurch gekennzeichnet, dass** als Katalysator eine Katalysatorzusammensetzung nach einem der Ansprüche 1 bis 11 eingesetzt wird.

14. Verfahren nach einem der Ansprüche 12 bis 13, **dadurch gekennzeichnet, dass** die Gasphasenoxidation des Chlorwasserstoffs das Überleiten eines Chlorwasserstoff und Sauerstoff enthaltenden Gases bei einer Temperatur von 180 bis 500°C, bevorzugt 200 bis 450°C, besonders bevorzugt 220 bis 380°C umfasst und das entstehende Chlor vom Reaktionswasser und gegebenenfalls nicht umgesetztem Sauerstoff und Chlorwasserstoff getrennt wird.

15. Verfahren nach einem der Ansprüche 12 bis 14, **dadurch gekennzeichnet, dass** die Gasphasenoxidation bei einem Druck von 1 bis 25 bar, bevorzugt 1,2 bis 20 bar, besonders bevorzugt 1,5 bis 17 bar und insbesondere bevorzugt 2,0 bis 15 bar durchgeführt wird.

16. Verfahren nach einem der Ansprüche 12 bis 15, **dadurch gekennzeichnet, dass** die Gasphasenoxidation adiabatisch oder isotherm, insbesondere adiabatisch durchgeführt wird.

17. Verwendung von Magnesiumfluorid als Katalysatorträger für einen Katalysator in der katalytischen Gasphasenoxidation von Chlorwasserstoff mit Sauerstoff.
